# EUROPEAN PATENT SPECIFICATION

(11) **EP 1 685 180 B1**
(45) Date of publication and mention of the grant of the patent: **19.06.2019**
(21) Application number: 04791182.1
(22) Date of filing: 08.10.2004
(51) Int. Cl.: C08G 65/10, C08G 65/12

(54) **PROCESS FOR THE PREPARATION OF A POLYETHER POLYOL**
VERFAHREN ZUR HERSTELLUNG VON EINEM POLYETHEROLYOL
PROCÉDÉ POUR LA PRÉPARATION D'UN POLYÉTHERPOLYOL

(30) Priority: 10.10.2003 EP 03256425
(43) Date of publication of application: 02.08.2006
(73) Proprietor: Shell Internationale Research Maatschappij B.V., 2596 HR The Hague (NL)
(72) Inventor: BECKERS, Johannes Gerhardus Joseph, NL-1031 CM Amsterdam (NL); ELEVELD, Michiel Barend, NL-1031 CM Amsterdam (NL); INGENBLEEK, Gerardus Wilhelmus Henricus, NL-1031 CM Amsterdam (NL)
(86) International application number: PCT/EP2004/052480
(87) International publication number: WO 2005/040248

(56) References cited:
- EP-A- 1 053 787
- DE-A- 10 143 195

## Description

The present invention relates to a process for the preparation of a polyoxyalkylene polyether polyol catalysed by dimetal cyanide complex catalysts.

### Background of the invention

Alkylene oxides are the main raw materials for the manufacture of polyoxyalkylene polyether polyols, also referred to herein as polyether polyols, which are useful in the preparation of polyurethane products. For example, EP-A-1053787 describes a process for making an epoxide polymer (polyether polyol) comprising polymerizing an epoxide, such as propylene oxide, in the presence of a double metal cyanide catalyst.

Alkylene oxide is usually produced in a process comprising (a) reacting alkenes with suitable oxidant to yield a reaction mixture containing alkylene oxide, (b) separating wet crude alkylene oxide from the reaction mixture obtained in step (a), and optionally (c) removing water from the wet crude alkylene oxide by at least one distillation treatment to obtain dry crude alkylene oxide. Step (b) generally consists of (b1) removing unreacted alkene from the reaction mixture, and (b2) separating the wet crude alkylene oxide from the mixture obtained in step (b1) by at least one distillation treatment. The thus obtained wet or dry crude alkylene oxide, further referred to herein as crude alkylene oxide, still contain minor quantities of by-products having a boiling point close to the alkylene oxides and/or forming azeotropic mixtures with the alkylene oxide.

However, even the presence in very minor amounts in the range of from 50 to 100 ppmw of impurities stemming from the manufacture of alkylene oxide derivatives is undesirable for the manufacture of polyether polyols, as stated in DE-A-101,43,195. Moreover, if crude alkylene oxide is employed in the conventional base-catalyzed polyol manufacture, the obtained polyether polyols generally exhibit a low nominal functionality and a high content in unsaturated structures. This makes them unsuitable for use in the manufacture of polyurethane foams.

Accordingly, only substantially purified alkylene oxide (further referred to herein as pure alkylene oxide) having an alkylene oxide content of more than 99.95% by weight is generally considered as satisfactory for the manufacture of alkylene oxide derivates. However, in distillation units useful for step (b) and optional step (c) of the above process, the contaminants cannot be removed from the alkylene oxide to the desired level due to insufficient separation capacity or due to unacceptable loss of alkylene oxide.

Therefore, pure alkylene oxide is generally prepared from crude alkylene oxide by submitting the crude alkylene oxide obtained from step (b) to an additional purification treatment (c).

The additional purification (d) usually comprises multiple process steps, as the removal of impurities stemming from step (a) is particularly difficult. This additional purification requires complex equipment, and consumes large amounts of energy as well as involving the undesired handling of alkylene oxide, as outlined in EP-A-0,755,716, US-A-3,578,568, and WO 02/070497. The purification treatment can also generate poly(alkylene oxide) of high molecular weight in the purified alkylene oxide, which is known to lead to application problems with polyether polyols prepared from the obtained alkylene oxides, as described in US-A-4,692,535 and WO-A-02/070497. Therefore, pure alkylene oxide suitable for the preparation of polyether polyols has to be treated to remove not only the impurities originating from its manufacture, but also to remove impurities that are generated during the purification treatment itself.

Due to the above-described reasons, it would be highly desirable for the skilled person to be able to use crude alkylene oxide instead of pure alkylene oxide for the preparation of polyether polyols. Such an alkylene oxide has the advantage of a simpler manufacture and thus better availability. The use of crude alkylene oxide would also help to avoid problems due to poly(alkylene)oxide generated in the purification treatments.

Surprisingly, it has now been found that polyether polyols can be prepared from crude alkylene oxide, which comprises on total composition from 99.00% by weight to less than 99.90% by weight of one or more alkylene oxides selected from the group consisting of ethylene oxide, propylene oxide and butylene oxide, in the presence of a catalyst comprising a dimetal cyanide complex and an initiator compound.

### Summary of the invention

The present invention pertains to a process for the preparation of a polyalkoxylene polyether polyol, which process comprises contacting an initiator compound having from 2 to 6 active hydrogen atoms in the presence of a catalyst comprising a dimetal cyanide complex with a crude alkylene oxide, which comprises on total composition from 99.00% by weight to less than 99.90% by weight of one or more alkylene oxides selected from the group consisting of ethylene oxide, propylene oxide and butylene oxide, to obtain the polyoxyalkylene polyether polyol.

### Detailed description of the invention

The subject process provides for a preparation of a polyether polyol, which can be used for preparing polyurethane product including polyurethane coatings, elastomers, adhesives, sealants, flexible, semi-rigid and rigid foams by reaction with a polyisocyanate under appropriate conditions, preferably for flexible polyurethane foams.

The present invention resides on the surprising finding that contrary to the established opinion, crude alkylene oxide may be used for the manufacture of polyether polyols if the process is carried out in the presence of a catalyst comprising a dimetal cyanide complex. Without wishing to be bound to any particular theory, it is believed that the catalyst comprising a dimetal cyanide complex selectively incorporates aldehydes present in the alkylene oxide as difunctional monomers into the polyether chain in a non-terminal position, possibly as acetal structures. The latter is further referred to herein as units derived from aldehyde. This is supported by the fact that the aldehydes are converted, while the measured functionality of the polyether polyol is not reduced. It is thought that aldehydes are incorporated as chain starter either in their enolic form or as aldol adduct under the conditions of conventional alkaline catalysis. This results in a reduced functionality and the presence of unsaturated structures in the polyether polyol.

The use of crude alkylene oxides for the preparation of polyether polyols, in particular those suitable for the preparation of polyurethane foams, which generally requires polyols to have a molecular weight of above 1100, was thus found to result in polyols that were unsuitable for use due to too low functionality and high degree of unsaturation, resulting in unsuitable polyurethane foams.

Although polyether polyols produced from mixtures of pure alkylene oxides, aldehydes and water in the presence of certain catalysts comprising dimetal cyanide complex have been described in US-A-3,404,109, the obtained polyether polyols were also not suitable for use in polyurethane products due to their low nominal functionality. Furthermore, the described process proceeded only to an incomplete conversion of the alkylene oxides, in spite of the very long reaction times.

Without wishing to be bound to any particular theory, it is believed that the catalysts employed in US-A-3,404,109 were not sufficiently active in catalyzing the polymerization reaction in a satisfactory way, in particular in the presence of water.

Crude alkylene oxide as used in the subject process is prepared according to steps (a) to (c). In step (a), an alkene feed is reacted with a suitable oxidant including aromatic or aliphatic hydroperoxides. Suitable oxidants are capable of epoxidation of the alkene to the corresponding alkylene oxide. The oxidants include oxygen, and oxygen-containing gases or mixtures such as air and nitrous oxide. Other suitable oxidants are hydroperoxide compounds, such as aromatic or aliphatic hydroperoxides. The hydroperoxide compounds preferably include hydrogen peroxide, tertiary butyl hydroperoxide, ethyl benzene hydroperoxide, and isopropyl benzene hydroperoxide, of which ethyl benzene hydroperoxide is most preferred. Even more preferably the process is an integrated styrene monomer/propylene oxide process, as for instance described in US-A-6,504,038.

Crude alkylene oxide can be separated from the reaction mixture obtained. Although such separation can be carried out in any way know to someone skilled in the art, the separation will generally comprise (b1) removing unreacted alkene from the reaction mixture obtained in (a), and (b2) separating crude alkylene oxide from the mixture obtained in step (b1) by at least one distillation treatment. In step (b1), a first distillation of the reaction mixture containing the alkylene oxide gives an overhead fraction containing unreacted alkene and some low boiling impurities. The distillation treatment can be carried out at a pressure of from 1 to 20 x 10⁵ N/m² (bar), and at a temperature range of from 10 °C to 250 °C. The distillation can remove the unreacted alkenes along with other low boiling impurities can be removed from the crude alkylene oxide. Preferably, the crude alkylene oxide as used in the subject process is prepared in a process including the steps (a), (b1) and (b2), as this permits to reduce the size of the distillation unit of step (b2) while maintaining a high throughput.

In step (b2), crude alkylene oxide is generally removed together with lower boiling contaminants as an overhead product from the reaction mixture obtained in step (b1). The distillation treatment can be carried out at a pressure of from 0.1 to 20 x 10⁵ N/m², and at a temperature range of from 0 °C to 250 °C. Preferably, the distillation treatment is carried out at a pressure in the range of from 0.1 to 1 x 10⁵ N/m², and at a temperature in the range of from 10 °C to 200 °C.

The crude alkylene oxide obtained in step (b) will generally still contain a significant amount of water.

Usually, polyether polyols that are produced by base-catalysis have a lower functionality than those produced from the same reactants using a catalyst comprising a dimetal cyanide complex. If polyol is prepared by a catalyst comprising a dimetal cyanide complex, additional two-functional initiator compounds other than the main initiator compounds having more than 2 active hydrogen atoms may be added in order to reduce the nominal functionality to obtain a functionality similar to that of the base-catalyzed polyols.

When wet crude alkylene oxide obtained from step (b) is employed, the water present in the crude alkylene oxide advantageously acts as a two-functional initiator compound. This allows simplifying the polyether polyol formulations, which require additional two-functional initiator compound to be added with pure alkylene oxide. This in turn reduces the amount and number of the different raw materials required for the synthesis.

Accordingly, the wet crude alkylene oxide obtained from step (b) preferably contains from 50 to 5000 ppmw (parts per million by weight) of water, more preferably from 100 to 4800 ppmw of water. More preferably, the wet crude alkylene oxide obtained from step (b) contains at most 4500 ppmw, again more preferably at most 4000 ppmw, yet more preferably at most 3500 ppmw, and most preferably at most 3000 ppmw of water.

In an optional step (c), part of the water still present in the alkylene oxide may be removed as an overhead product from the crude alkylene oxide, as for instance described in US-A-3,607,669. In at least one distillation treatment of step (c), one or more entrailer components may be added to the crude alkylene oxide. Entrailer components tend to reduce the amount of components other than alkylene oxide in the bottom product of the distillation unit, in particular water. Preferred entrailer components are aliphatic hydrocarbons having 4 or 5 carbon atoms.

This distillation treatment can be carried out at a pressure of from 1 to 20 x 10⁵ N/m², and at a temperature range of from 0 °C to 200 °C. Preferably, the distillation treatment is carried out at a pressure in the range of from 5 to 10 x 10⁵ N/m², and at a temperature in the range of from 10 °C to 150 °C. The dry crude alkylene oxide obtained from step (c) preferably contains from 0 to 150 ppmw of water, more preferably from 10 to 150 ppmw of water. Yet more preferably the dry crude alkylene oxide obtained from step (c) contains less than 120 ppmw of water, again more preferably less than 100 ppmw of water, even more preferably less than 80 ppmw, and most preferably less than 50 ppmw of water.

Whereas the separation of the unreacted alkenes and part of the water could be effected without difficulty, as described in steps (b1), (b2) and (c), the separation of hydrocarbons, aldehydes and acids from the alkylene oxide is particularly difficult, even by fractional distillation.

Generally, distillation units used for step (b2) and optionally (b1) and (c) do not have a high enough resolution to separate the alkylene oxides from close boiling contaminants, as this would require columns with a very high number of bottoms, and hence strongly limit the throughput.

The crude alkylene oxide comprises on total composition from 99.00% by weight to less than 99.90% by weight of an alkylene oxide selected from the group consisting of ethylene oxide, propylene oxide or butylene oxide. The crude alkylene oxide preferably comprises more than 99.00% by weight, and most preferably at least 99.50% by weight of alkylene oxide. Preferably, the crude alkylene oxide comprises at most 99.85% by weight, yet more preferably less than 99.83% by weight, again more preferably at most 99.80% by weight, more preferably less than 99.80% by weight, yet more preferably at most 99.79% by weight, and most preferably at most 99.78% by weight of alkylene oxide, the remainder being compounds originating from the epoxidation reaction of step (a), or reaction products of these compounds during steps (a) and/or (b).

The crude alkylene oxide may contain hydrocarbons such as alkenes and alkanes, and oxygen containing by-products such as aldehydes, ketones, alcohols, ethers, acids and esters, such as water, acetone, acetic aldehyde, propionic aldehyde, methyl formate, and the corresponding carbon acids.

The crude alkylene oxide may also comprise a small quantity of poly(alkylene oxide) having a weight average molecular weight of more than 2000, however preferably less than 50 ppmw. Unless stated otherwise, the molecular weights mentioned are weight average molecular weights, and the functionality is the nominal functionality (Fn). The crude alkylene oxide more preferably contains at most 30 ppmw, yet more preferably at most 20 ppmw particularly more preferably at most 15 ppmw, again more preferably at most 12 ppmw, yet more preferably at most 5 ppmw, and most preferably contains at most 3 ppmw of poly(alkylene oxide)having a weight average molecular weight of more than 2000.

Alkylene oxides are selected from the group consisting of crude ethylene oxide, crude propylene oxide, and crude butylene oxide. More preferred crude alkylene oxides contain ethylene oxide and propylene oxide, of which crude propylene oxide is the most preferred.

The crude alkylene oxide may be employed according to the subject invention as sole alkylene oxide, or in combination with at least one pure alkylene oxide. This may be advantageous, if for instance at the polyol production site only one crude alkylene oxide is produced, whereas other alkylene oxides not produced at the site are required in the polyol formulation. Hence, these additional alkylene oxides may be sourced as commercially available pure alkylene oxides.

The pure alkylene oxide may be introduced into the polyol formulation prior or during the process, for instance by first feeding a crude alkylene oxide, and in a later stage of the process by feeding a mixture of a crude and pure alkylene oxide, or by mixing crude alkylene oxide and pure alkylene oxide in situ throughout the process, or by mixing the alkylene oxides before the addition to the other components of the reaction.

Advantageously, in a formulation where more than one alkylene oxide is required, for instance for polyether polyols containing propylene oxide and ethylene oxide moieties, a combination containing from 50 to 99% by weight of at least one crude alkylene oxide, and from 50 to 1% by weight of at least one pure alkylene oxide is employed.

Preferably, the combination contains at least 75% by weight of crude alkylene oxide, more preferably at least 80% by weight and most preferably 85% by weight of crude alkylene oxide.

The subject process is preferably carried out in such way, that the mixture of crude and pure alkylene oxide comprises on total composition from 95.00% by weight to 99.95% by weight of one or more alkylene oxides selected from the group consisting of ethylene oxide, propylene oxide and butylene oxide, and of from 5.0% by weight to 0.05% by weight of compounds other than alkylene oxide stemming from the production of the crude alkylene oxide.

Pure alkylene oxide is generally prepared from crude alkylene oxide by submitting the crude alkylene oxide obtained from step (b) and optionally (c) to an additional purification treatment (d). Such additional purification treatment (d) can include one or more fractioned and/or extractive distillations of the crude alkylene oxide, whereby the alkylene oxide is separated as overhead product from contaminants having a higher boiling point, as described for instance in US-A-3,881,996 and US-A-6,024,840. Other suitable purification treatments include filtration and adsorption treatments with suitable adsorbents as described in US-A-5,352,807. A preferred treatment (d) is extractive distillation under addition of heavier hydrocarbons, such as ethyl benzene or octane, whereby the alkylene oxide is separated as overhead product. Pure alkylene oxide obtained from step (d) is considered to comprise on total composition more than 99.95% by weight of alkylene oxide. Preferably, pure alkylene oxide contains esters, aldehydes and ketones in concentrations of less than 100 ppmw, preferably less than 50 ppmw, and most preferably less than 30 ppmw.

Initiator compounds according to the subject process are compounds having from 2 to 6 active hydrogen atoms. The active hydrogen atoms are typically present in the form of hydroxyl groups, but may also be present in the form of e.g. amine groups. Suitable initiator compounds include water, alcohols containing at least two active hydrogen atoms per molecule available for reaction with the crude alkylene oxides. Suitable aliphatic initiator compounds include polyhydric alcohols containing of from 2 to 6 hydroxyl groups per molecule. Suitable aromatic compounds include aromatic alcohols containing at least two active hydrogen atoms per molecule available for reaction with the crude alkylene oxides. Examples of such initiator compounds are water, diethylene glycol, dipropylene glycol, glycerol, di- and polyglycerols, pentaerythritol, trimethylolpropane, triethanolamine, sorbitol, mannitol, 2,2'-bis(4-hydroxylphenyl)propane (bisphenol A), 2,2'-bis(4-hydroxylphenyl)butane (bisphenol B) and 2,2'-bis(4-hydroxylphenyl)methane (bisphenol F). Preferred are aliphatic alcohols containing at least 2, more preferably at least 3 active hydrogen groups in the form of hydroxyl groups. Preferably, the aliphatic alcohols contain at most 5, more preferably at most 4, and most preferably at most 3 hydroxyl groups per molecule.

Initiators of a higher molecular weight may preferably be used to start up the subject process in the initial phase, for instance during the catalyst activation, as this was found to be beneficial for achieving optimum catalyst activity without long induction times. The higher molecular weight initiator may be a lower molecular weight initiator that has been reacted with an alkylene oxide to form an oligomeric or telomeric higher molecular weight initiator either in the presence of a conventional basic catalyst or in the presence of a catalyst comprising a dimetal cyanide complex. The higher molecular weight initiator preferably has a molecular weight of from 200 to 1200, and more preferably has a molecular weight from 250 to 1000.

The process according to the present invention can be operated in a batch-wise, semi-continuous or continuous mode. The subject process has been found to be especially advantageous for the continuous preparation of polyoxyalkylene polyether product. In this continuous operational mode of the subject process, initiator compound, crude alkylene oxide and additional catalyst are continuously fed to the reactor, and the obtained polyether polyol product is removed continuously from the reaction vessel. In such continuously operated process, after the initial start-up phase wherein the catalyst composition is activated, initiator compounds having lower molecular weights can preferably be employed, such as for instance glycerol.

With the exception of water, the impurities present in the crude alkylene oxide are generally not considered to be initiator compounds according op the subject process.

Other than water, the crude alkylene oxide preferably contains aldehydes as main contaminant. Accordingly, the subject process preferably also relates to the copolymerization of an alkylene oxide and an aldehyde.

The present process preferably makes use of highly active catalysts comprising dimetal cyanide complex as developed within the recent years.

Catalyst compositions comprising dimetal cyanide complex usually require activation by contacting them with alkylene oxide, upon which activation they are active as catalysts for the subject process. This activation can be done prior to or in an initial start-up phase of the subject process.

Principally any catalyst composition comprising dimetal cyanide complex, which is useful for the preparation of polyether polyols, can be used for the process according to the present invention, provided that once activated the catalyst is sufficiently active in catalysing the polymerization of alkylene oxides and initiator compound.

Processes by which the catalyst composition comprising dimetal cyanide complex for use in the present invention can be prepared, have been described for instance in JP-A-4-145,123.

Generally, a catalyst composition comprising dimetal cyanide complex useful for the present process comprises a bimetallic cyanide complex coordinated to an organic ligand. Such a bimetallic cyanide complex is usually prepared by mixing together aqueous solutions, or solutions in water and organic solvent mixtures, of a metal salt, preferably a salt of Zn(II) or Fe(II), and a polycyanometal complex, preferably containing Fe(III) or Co(III), and bringing the organic ligand, for instance tertiary butanol, into contact with the thus obtained bimetallic cyanide complex and removing the surplus of solvents ligand. The catalyst composition comprising the dimetal cyanide complex can then be dried to a powder, which allows stable storage, however requires a redispersion step prior to use.

Preferably due to the high proven activity and simple handling, the subject catalyst composition is prepared according to WO-A-01/72418 as dispersion in a combination of a lower molecular weight polyether polyol telomer and catalyst.

The above-mentioned activation of the catalyst composition to active catalyst can be done prior to or in an initial start-up phase of the subject process.

Although crude alkylene oxides may be employed for the activation of the catalyst composition, it was found that if the crude alkylene oxide contained more than 100 ppmw of water, the activation only proceeded very sluggishly, and required long induction times. Consequently, in order to avoid very long induction times before the catalyst achieves an activity satisfactory for an industrial scale process, the catalyst composition comprising a dimetal cyanide complex preferably is activated with an alkylene oxide containing less than 100 ppmw of water prior to, or in the initial phase of the subject process, as for instance a crude alkylene oxide obtained from step (c).

Accordingly, the subject process preferably comprises the step of contacting the catalyst composition comprising a dimetal cyanide complex with an alkylene oxide containing less than 100 ppmw of water to obtain an activated catalyst.

The amount of the catalyst composition comprising the dimetal cyanide complex to be used depends largely on the functionality of the initiator, the desired functionality and the desired molecular weight of the polyether polyol.

Generally, the amount of catalyst is in the range of from 2 ppmw to 250 ppmw calculated on the weight of obtained product, preferably in the range from 5 ppmw to 150 ppmw, more preferably in the range from 7 to 95 ppmw, and most preferably in the range from 8 to 40 ppmw.The catalysts comprising dimetal cyanide complex suitable for use in the subject process generally are sufficiently active to allow their use at such very low concentrations. At such low concentrations, the catalyst can often be left in the polyether products without an adverse effect on product quality. The ability to leave catalysts in the polyol is an important advantage because commercial polyols currently require a catalyst removal step.

Moreover, the catalysts remaining in the polyether polyols usually are also sufficiently active to be recycled. This is particularly advantageous, as the catalyst activation step may only be performed once, whereas for later start-up phases advantageously the activated catalyst within the polyols obtained by the subject process may be employed. This advantageously allows eliminating the activation step. For instance if the subject process is performed in the continuous mode, polyether polyol product obtained in the subject process may be used to start up the reaction, whereas non-activated catalyst composition is continuously added during the process.

Accordingly, the subject process preferably comprises the additional step of recycling part of the polyalkoxylene polyether polyol containing catalyst comprising dimetal cyanide complex.

The presence of an initiator compound of a higher molecular weight may was also found to be beneficial in the above-described activation step. This allows achieving optimum catalyst activity without requiring long induction times.

The activation of the catalyst composition to obtain an activated catalyst may be conveniently detected by a rapid drop in the reactor pressure due to reacted alkylene oxide. Once the activated catalyst was formed, water present in the crude alkylene oxide within the above-defined amounts was not found to affect the catalyst activity in a negative way.

The activation in the initial phase may be conveniently performed in the polymerization reactor or in a separate reactor.

The subject process may be carried out at any suitable temperature, for example in a range of from 60 to 180 °C, preferably at a temperature of at least 80 °C, more preferably at least 95 °C, and most preferably at least 100 °C. The temperature preferably is at most 150 °C, more preferably at most 140 °C, and most preferably at most 135 °C. Accordingly, the subject process is typically carried out by reacting a mixture of hydroxyl group-containing initiator with DMC catalyst at atmospheric pressure. Higher pressures may also be applied, but the pressure will usually not exceed 20 x 10⁵ N/m² (bar) and preferably is from 1 to 5 x 10⁵ N/m².

The above-described combination of process conditions and reactants has now allowed preparing polyether polyols having similar properties and a similar performance to polyether polyols prepared from pure alkylene oxides, in spite of the incorporation of aldehydes and/or water into the polyether polymer chains.

The polyether polyol obtainable according to the subject process preferably has an average molecular weight in the range of from 1200 to 8500. Preferably, the polyether polyol preferably has an average molecular weight of at least 2000, yet more preferably of at least 2400, and most preferably, of at least 2500. The polyether polyol also preferably has a molecular weigh of at most of 7500, particularly preferably of at most 7000, and most preferably of at most 6500.

The polyether polyol of the present invention suitably has a average nominal functionality of from 1.5 to 8, more suitably from 2.0 to 6.0. Its nominal functionality accordingly is at least 1.5, preferably at least 2.0, and yet more preferably at least 2.5. It also has a nominal average functionality of at most 8, preferably of at most 5.5, more preferably of at most 4.5, again more preferably of at most 4.0, and most preferably of at most 3.5.

Conveniently, the polyol prepared according to the present invention will have a hydroxyl content of from 10 to 100 mg KOH/g polyol. Preferably, the polyol will have a hydroxyl content of from 15 to 85 mg KOH/g polyol, more preferably of from 20 to 75 mg KOH/g polyol, again more preferably of from 25 to 65 mg KOH/g polyol, and most preferably a hydroxyl content of from 25 to 60 mg KOH/g polyol.

The polyol prepared according to the present invention further may contain primary and/or secondary hydroxyls, which depends on the nature of the used alkylene oxides. Usually, the level of primary hydroxyl corresponds to the amount of ethylene oxide used. Preferably, the polyols contain of from 0 to 20% by weight of units derived from ethylene oxide, more preferably of from 5 to 20% by weight of units derived from ethylene oxide, as this results in a high reactivity in polyurethane formation reactions with polyisocyanate crosslinking agents.

The present description also discloses polyether polyols obtainable by the subject process. Accordingly, the polyether polyols comprise of from 0.0001 to 5% by weight of units derived from aldehyde, more preferably of 0.001 to 3.5% by weight, and most preferably of from 0.01 to 1% by weight of units derived from aldehyde. Said polyols may contain of from 0.02 to 5.0% by weight of units derive from aldehyde.

The present description also discloses the use of the polyether polyol obtainable by the subject process for the preparation of polyurethane foams, and polyurethane foams and shaped article of polyurethane foam obtainable.

Polyurethane foams can be obtained by mixing polyol components, at least one of which is the polyether polyol according to the present invention, with a polyisocyanate, usually in the presence of blowing agents, catalyst and other additives. This may be effected in a mold, resulting in a shaped article of polyurethane foam, or for instance in a slabstock process, wherein a block of polyurethane foam is continuously produced, and shaped afterwards by additional shaping steps. These shaped articles made of polyurethane foam are widely used in numerous applications in the automotive and aircraft industry, in upholstered furniture, mattresses and technical articles. Other applications include the use of polyurethane foam as carpet backings, foamed seat saddles for motorbikes, car light gaskets, and lip seals of air filters for engines.

The process according to the present invention is further illustrated by the following examples. In the example section, the methods employed for measurements were as follows: viscosity was measured according ASTM method D445, hydroxyl numbers were measure according to ASTM method D4274, water content according to ASTM method D4672, acid values according to ASTM D 1980 and the volatile organic compounds were measured by using a gas chromatograph. Alkylene oxide purity was determined by gas chromatography, and by the above-described method for the determination of the water content, and allowed a determination of the alkylene oxide content with a deviation of about 20 ppmw.

The catalyst comprising a dimetal cyanide complex (referred to as DMC catalyst) used was a highly viscous, stable, white dispersion containing 3 wt% DMC catalyst particles dispersed in a propylene oxide adduct of polyglycol having a number average molecular weight of 400 Dalton, and was prepared according to WO-A-01/72418.

### Example 1

For the following example, a dry crude propylene oxide obtained from step (c) was employed. The dry crude propylene oxide comprised 99.80% by weight of propylene oxide, 1400 ppmw of propionaldehyde and 50 ppmw of water. The remainder consisted of impurities such as acids and alkenes.

A 1 1 reactor equipped with stirrer and a heating/cooling system was charged with 71 g of a propylene oxide adduct of glycerol having a number average molecular weight of 670 Dalton and 16 g of the dry crude propylene oxide adduct of glycerol having a number average molecular weight of 400 Dalton. Subsequently 0.8 grams of the DMC catalyst was added. The reactor was then sealed and heated to 130 °C, and vacuum was applied to remove traces of water and air from the reactor.

Starting at a pressure of 5 x 10³ N/m², 315 g of the crude propylene oxide were added continuously during 100 minutes. Then, during 120 minutes 10 g glycerol, 3 g of 1,2-propanediol and 385 g of the dry crude propylene oxide were added continuously. The reaction mixture was maintained at 130 °C for 60 minutes, and then the reactor content was subjected to reduced pressure followed by a nitrogen purge for 15 minutes.

The obtained polyether polyol had a hydroxyl value of 53 mg KOH/g, and an acid value of 0.015 mg KOH/g. The latter acid value is a measure for the amount of acidic residual material in the polyol.

### Comparative Example 1

The same procedure was performed using purified propylene oxide with a purity of more than 99.98% by weight instead of the propylene oxide, further containing 15 ppmw of propionaldehyde and 50 ppmw of water. The obtained polyether polyol had a hydroxyl value of 55 mg KOH/g, and an acid value of 0.010 mg KOH/g.

The hydroxyl value and acid value of both polyethers obtained in Example 1 and Comparative Example 1 are within the desired range.

### Example 2

A wet crude propylene oxide obtained from step (b) was employed. The wet crude propylene oxide comprised 99.60% by weight of propylene oxide. The remainder consisted of impurities with boiling points below 100 °C, such as 1500 ppmw of propionaldehyde, 1800 ppmw of water, 800 ppmw of acetaldehyde, the remainder being acetone, lower alcohols and acids.

A 1 1 reactor equipped with stirrer and a heating/cooling system was charged with 125 g of a propylene oxide adduct of glycerol having a number average molecular weight of 670 Dalton, 1 g of a propylene oxide adduct of glycerol having a number average molecular weight of 400 Dalton were added and 0.4 grams of the DMC catalyst. The reactor was then sealed and heated to 130 °C, and vacuum was applied to remove traces of water and air from the reactor.

Starting at a pressure of 5 x 10³ N/m², 10 g of pure propylene oxide containing less than 100 ppmw of water were added to pre-activate the catalyst. Following 5 minutes of pre-activation of the catalyst, 665 g of alkylene oxides composed of 85% by weight of the wet crude propylene oxide and 15% by weight of pure ethylene oxide were added continuously during 170 minutes. The reaction mixture was maintained at 130 °C for 60 minutes, and then the reactor content was subjected to reduced pressure followed by a nitrogen purge for 60 minutes.

The polyether polyol obtained had a hydroxyl value of 47 mg KOH/g, a viscosity of 280 mm²/s (cSt), a water content of 0.02% by weight, an acid value of 0.009 mg KOH/g and a total content of volatile organic compounds of 19 ppmw.

The polyether polyol contained 310 ppmw of propionaldehyde, as determined by releasing the incorporated aldehydes by acidification, and analysis of the released volatiles by a gas chromatograph.

### Comparative Example 2

Example 2 was repeated, using purified propylene oxide with a purity of more than 99.98% by weight instead of the propylene oxide, containing 15 ppmw of propionaldehyde, 15 ppmw of acetic aldehyde and 50 ppmw of water, and by adding 27 g of PPG400 in order to account for the water present in the formulation example 1. The obtained polyether polyol had a hydroxyl value of 47 mg KOH/g, a viscosity of 290 mm²/s (cSt), a water content of 0.03% by weight, an acid value of 0.009 mg KOH/g, and a total content of volatile organic compounds of 16 ppmw.

Both polyether polyols obtained in Example 2 and Comparative Example 2 had very similar properties which are within the range considered satisfactory.

### Example 3

A polyurethane foam formulation was prepared from 100 parts by weight of the polyol obtained from Example 2, further containing 3.8 parts by weight of water, 0.3 pbw of dimethylethanolamine (DMEA), 1.1 pbw of Tegostab B 4900 (a silicone surfactant, Tegostab is a trademark of Goldschmidt Polyurethane Additives) and 0.18 pbw of stannous octoate. The formulation was reacted with Caradate 80 (a toluene diisocyanate blend containing 2,4 and 2,6 isomers in an 80:20 ratio, Caradate is a trademark) at an isocyanate index of 107. The resulting foam had a density of 25.8 kg/m³, a tensile strength of 115 kPa, and an elongation of 207%.

### Comparative Example 3

Example 3 was repeated, however using 100 pbw of the polyol obtained from comparative example 2. The resulting foam had a density of 25.9 kg/m³, a tensile strength of 115 kPa, and an elongation of 200%.

Both foams obtained from Example 3 and Comparative Example 3 were well within the expected range of properties for this formulation. Both exhibited suitable cell structure and appearance, and passed dry and wet compression set tests.

The above results show that crude alkylene oxide can be employed successfully for the preparation of polyether polyols. The resulting polyether polyol also performed well in the manufacture of polyurethane foams. These foams did not exhibit a higher content in volatile organic compounds, and otherwise did not exhibit any measurable difference from reference polyurethane foams prepared from purified propylene oxide.

Furthermore, the polyether polyols prepared with crude propylene oxide contained units derived from propionaldehyde. This could be illustrated by the release of the incorporated propionaldehyde from the polyols under strongly acidic conditions. The polyether polyols did not exhibit the deviation in functionality and increase in unsaturation expected if the propionaldehyde had been incorporated in a terminal position in the chain.

## Claims

1. A process for the preparation of a polyalkoxylene polyether polyol, which process comprises contacting an initiator compound having from 2 to 6 active hydrogen atoms in the presence of a catalyst comprising a dimetal cyanide complex with a crude alkylene oxide, which comprises on total composition from 99.00% by weight to less than 99.90% by weight of one or more alkylene oxides selected from the group consisting of ethylene oxide, propylene oxide and butylene oxide, to obtain the polyoxyalkylene polyether polyol.

2. A process according to claim 1, wherein the crude alkylene oxide is obtained by the steps of:
(a) reacting alkenes with a suitable oxidant to yield a reaction mixture containing alkylene oxide
(b) separating crude alkylene oxide from the reaction mixture obtained in (a), and
(c) optionally removing water from the crude alkylene oxide by at least one distillation treatment.

3. A process according to any one of claims 1 to 2, wherein the crude alkylene oxide obtained in step (b) comprises from 50 to 5000 ppmw of water, based on total composition.

4. A process according to any one of claims 1 to 3, wherein part of the polyalkoxylene polyether polyol containing catalyst comprising dimetal cyanide complex is recycled.

## Patentansprüche

1. Verfahren zur Herstellung eines Polyalkoxylenpolyetherpolyols, bei dem man eine Initiatorverbindung mit 2 bis 6 aktiven Wasserstoffatomen bei Vorliegen eines Katalysators, der einen Dimetalcyanid-Komplex enthält, mit einem rohen Alkylenoxid in Kontakt bringt, das in der Gesamtzusammensetzung 99,00 Gew .-% bis weniger als 99,90 Gew .-% eines oder mehrerer Alkylenoxide umfasst, die ausgewählt sind aus der Gruppe, die aus Ethylenoxid, Propylenoxid und Butylenoxid besteht, um das Polyoxyalkylenpolyetherpolyol zu erlangen.

2. Verfahren nach Anspruch 1, wobei das rohe Alkylenoxid durch die folgenden Schritte erlangt wird:
(a) Umsetzen von Alkenen mit einem geeigneten Oxidationsmittel, um ein Reaktionsgemisch zu erlangen, das Alkylenoxid enthält,
(b) Abtrennen von rohem Alkylenoxid aus dem in (a) erhaltenen Reaktionsgemisch, und
(c) optional Entfernen von Wasser aus dem rohen Alkylenoxid durch mindestens eine Destillationsbehandlung.

3. Verfahren nach einem der Ansprüche 1 bis 2, wobei das in Schritt (b) erlangte rohe Alkylenoxid 50 bis 5000 Gew.-ppm Wasser enthält, bezogen auf die Gesamtzusammensetzung.

4. Verfahren nach einem der Ansprüche 1 bis 3, wobei ein Teil des Polyalkoxylenpolyetherpolyol, das einen Katalysator enthält, der einen Dimetallcyanid-Komplex umfasst, rezykliert wird.

## Revendications

1. Procédé de préparation d'un polyéther polyol de polyalcoxylène, lequel procédé comprend la mise en contact d'un composé initiateur ayant de 2 à 6 atomes d'hydrogène actif en présence d'un catalyseur comprenant un complexe de cyanure dimétallique avec un oxyde d'alkylène brut, qui comprend une composition totale de 99,00 % en poids à moins de 99,90 % en poids d'un ou plusieurs oxydes d'alkylène choisis dans le groupe constitué des éléments suivants : l'oxyde d'éthylène, l'oxyde de propylène et l'oxyde de butylène, pour obtenir le polyéther polyol de polyoxyalkylène.

2. Procédé selon la revendication 1, dans lequel l'oxyde d'alkylène brut est obtenu par les étapes consistant à :
(a) faire réagir des alcènes avec un oxydant approprié pour obtenir un mélange réactionnel contenant de l'oxyde d'alkylène,
(b) séparer l'oxyde d'alkylène brut du mélange réactionnel obtenu en (a), et
(c) éliminer éventuellement l'eau de l'oxyde d'alkylène brut par au moins un traitement de distillation.

3. Procédé selon l'une quelconque des revendications 1 à 2, dans lequel l'oxyde d'alkylène brut obtenu à l'étape (b) comprend de 50 à 5 000 ppm en poids d'eau, par rapport à la composition totale.

4. Procédé selon l'une quelconque des revendications 1 à 3, dans lequel une partie du catalyseur contenant un polyéther polyol de polyalcoxylène comprenant un complexe de cyanure dimétallique est recyclée.
